# EUROPEAN PATENT APPLICATION

(11) **EP 3 657 009 A1**
(43) Date of publication of application: **27.05.2020**
(21) Application number: 18208192.7
(22) Date of filing: 24.11.2018
(51) Int. Cl.: F03B 11/00, F03B 11/04

(54) **A METHOD TO ENHANCE OPERATION EFFICIENCY OF WATER TURBINES AND TO REDUCE CAVITATION OF COMPONENTS THEREOF**

(71) Applicant: Lin, Zuei-Ling, Taipei 10567 (TW)
(72) Inventor: Lin, Zuei-Ling, Taipei 10567 (TW)
(74) Representative: Cabinet Chaillot

(57) **Abstract**

A method to dispose at least one air guiding tube **(41)** between a penstock **(20)** and a water turbine **(30)** installed on a dam **(10)** to form negative pressure at an outlet **(412)** of the air guiding device **(40)** by the water kinetic energy produced from high speed of water flow to take in external air for pressurizing, so as to produce a plurality of pressured air bubbles **(b)** mixed into the water **(w).** The water with pressured air bubbles **(b)** would be decompressed when flowing to an exit **(22)** of the penstock **(20)** and has their volumes increased, so as to enhance the water kinetic energy for driving the water turbine **(30)** more efficiently; meanwhile the method can prevent from production of cavities and further avoid damages of the components of the water turbine **(30)** from cavitation.

## Description

### BACKGROUND OF THE INVENTION

### 1. Field of Invention:

The present invention relates to a method to enhance operation efficiency of water turbines and to reduce cavitation of components thereof.

### 2. Description of the Related Art:

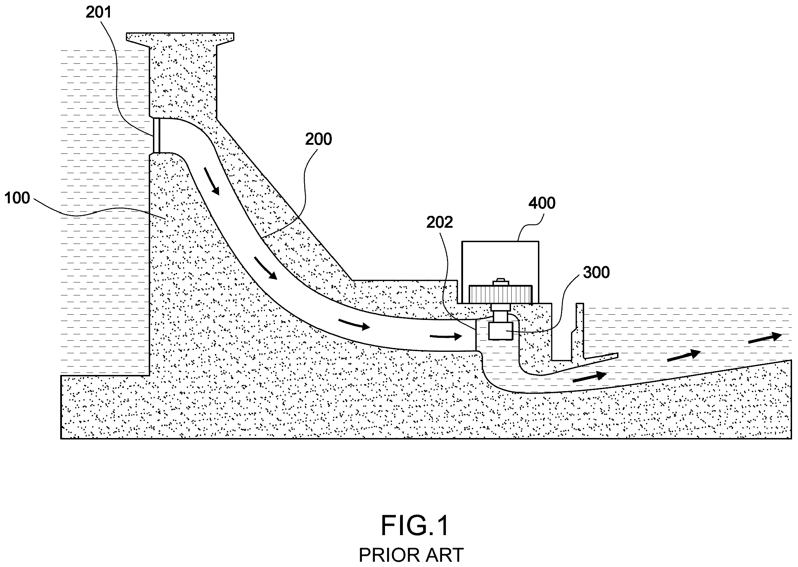

As shown in FIG. 1, a water turbine **300** has a penstock **200** installed on a dam **100** at a hydroelectric power station and the penstock has an entry **201** and an exit **202** for the water to flow through the entry **201** of the water penstock **200** from the top to the bottom of the exit **202** to the water turbine **300**, and the water turbine **300** rotates and drives a generator **400** connected thereto to generate electrical energy.

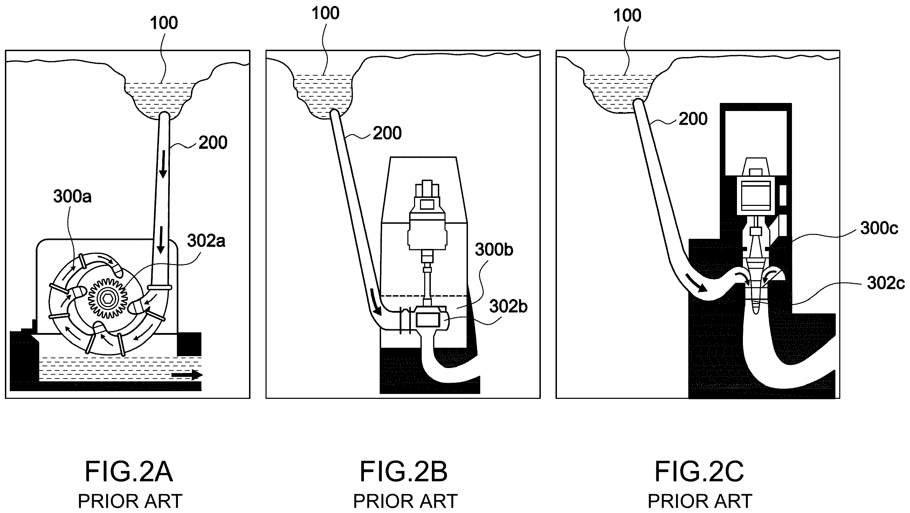

The water turbine can be roughly classified into an impulse turbine and a reaction turbine according to its working principle. Among them, the impulse turbine uses a high-speed water flow impacting runner blade or water bucket **302a** for work, and the main representative model is a Pelton Turbine **300a** as shown in Fig. 2A. As for the reaction turbine, the pressure and kinetic energy of the water are used to perform work, and the main representative model is shown in Fig. 2B, a Francis Turbine **300b** using the runner blades **302b**, and Fig. 2C, a Kaplan Turbine **300c** using a spiral propeller blade **302c**.

However, in the above-mentioned one type of water turbine, the water head position can be used to drive the runner blades, and the outer structure can be roughly divided into: non-closed casing **301a**, as shown in FIG. 2A. Pelton Turbine; and closed casing **301b**, such as the Francis Turbine shown in Fig. 2B, and the Kaplan Turbine shown in Fig. 2C.

However, there is a special physical phenomenon in the operation of the turbine, that is, the high-speed water flow in the turbine to the guide plate, the impeller and other related parts and accessories, the impact produces high-pressure zone and low-pressure zone, and the potential energy conversion of water in the high-pressure zone for electric energy, when the pressure in the low pressure zone is lower than the vapor pressure of water, the water vaporizes and generates air bubbles, which causes erosion of the components of the turbine, thus affecting the efficiency and service life of the water turbine. However, in order to prevent cavitation of water turbine-related parts and accessories, only special metal materials resistant to cavitation can be used, but they are expensive and difficult to process, such as special stainless steel materials such as ASTM A487 stainless steel.

Hence, if the design is too complicated to improve the above problems, or the design of the structure of the turbine will be changed, it is not easy to complete, and it is costly. Therefore, how to manufacture a water turbine at a low cost, thereby increasing the power of the water turbine and suppressing the occurrence of cavitation of related components such as turbine components, is a problem to be solved by the present invention.

### SUMMARY OF THE INVENTION

A primary objective the present invention is to provide a method for improving the power generation efficiency of a water turbine and suppressing cavitation of a turbine component.

To achieve the objectives mentioned above, the technical means adopted by the present invention including a method according to the annexed claims.

Preferably, the water turbine is a reaction turbine having a closed casing and a connecting section connected to the exit of the penstock, and the air guiding device includes at least one air guiding tube which is arranged on the pipe section before the exit or on the connecting section.

According to the structures disclosed, the air guiding device further includes an annulus periphery and an annular output passage formed inside the annulus periphery , and the at least one air guiding tube is disposed on the annulus periphery .

According to the structures disclosed, the reaction turbine includes a Francis turbine or a Kaplan turbine.

In another preferred embodiment, the water turbine is an impulse turbine and the exit of the penstock is extended to the plurality of runner blades of the impulse turbine as the air guiding device is disposed at a front of the exit .Furthermore, the impulse turbine includes a Pelton turbine.

According to the structures disclosed, the air control valve is either manual or automatic.

According to the structures disclosed, the air control valve is closed when the water flow in the penstock is not flowing at high speed, and the air control valve is opened when the water flow in the penstock is flowing at high speed.

With structures disclosed above, the present invention can provide an air guiding device disposed between the penstock and the plurality of runner blades of the water turbine, and use the Bernoulli's Principle and the reservoir without changing any original design inside the water turbine. A high-speed water flow can be generated by the water head. The high-speed water flow forms a negative pressure at the air guiding device to absorb the external air and mix with the water to produce a water flow containing a large amount of pressurized bubbles; since the cavitation phenomenon is mainly due to high speed the water flow impacts the runner blade, and the low pressure part is lower than the vapor pressure of the water, causing the water to vaporize and generate air bubbles, which causes erosion of the relevant components inside the water turbine, thus affecting the power and service life of the water turbine; since the high pressure bubble of the invention has compressibility, it will not break when compressed, but conventionally, cavities in the water flow cavitation will rupture. Therefore, the pressured air bubbles of the present invention can not only increase the force of the water flow to enhance the operation efficiency of the water turbine, but also contain pressurized air bubbles in the water flow and suppress the occurrence of cavitation in the low pressure area, so as to prevent the occurrence of cavitation in the runner blades and related components.

### BRIEF DESCRIPTION OF THE DRAWINGS

FIG. 1 is a schematic diagram of arrangement of a hydroelectric power station according to the prior art;
FIG. 2A is a schematic diagram illustrating a structure of a conventional Francis turbine;
FIG. 2B is a schematic diagram illustrating a structure of a conventional Kaplan turbine;
FIG. 2C is a schematic diagram illustrating a structure of a conventional Pelton turbine;
FIG. 3 is a perspective view of structure of the present invention in an embodiment with a water turbine having a closed casing;
FIG. 4A is a schematic diagram of the present invention in an embodiment, showing an air guiding device disposed before an exit of a penstock thereof;
FIG. 4B is a schematic diagram of the present invention in an embodiment, showing the air guiding device disposed on a pipe section of a water turbine thereof;
FIG. 5 is a partially enlarged view of FIG. 4B;
FIG. 6 is a sectional view along line 6-6 of FIG. 5;
FIG. 7 is a sectional view of a structure of the air guiding device in another embodiment;
FIG. 8 is a sectional view along line 8-8 of FIG. 7;
FIG. 9 is a schematic diagram illustrating an application example of the present invention in an embodiment;
FIG. 10 is another schematic diagram illustrating the application example of the present invention in an embodiment;
FIG. 11 is a schematic diagram of the present invention in another embodiment, showing the water turbine having an open casing; and
FIG. 12 is a schematic diagram illustrating an application example of the present invention in another embodiment.

### DETAILED DESCRIPTION OF THE PREFERRED EMBODIMENT

The following provides a preferred embodiment of the technical features of the present invention; however, there are many types of water turbines, and the shapes and structures are not completely the same. Therefore, although only the preferred embodiment is described, the technical means used thereof are the same, so they are not described one by one. The water turbine parts and accessories described below include related components such as water turbine parts and accessories. Another runner blade may also be referred to as an impeller.

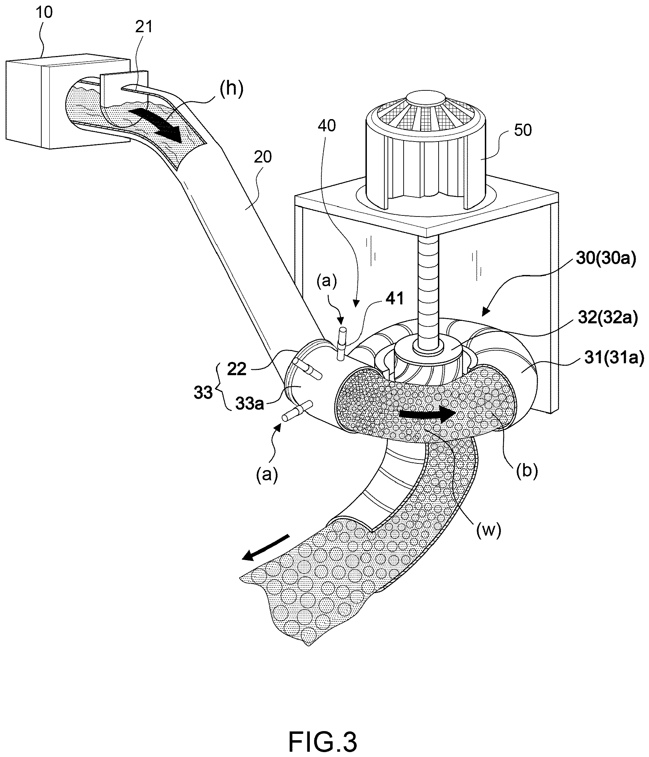

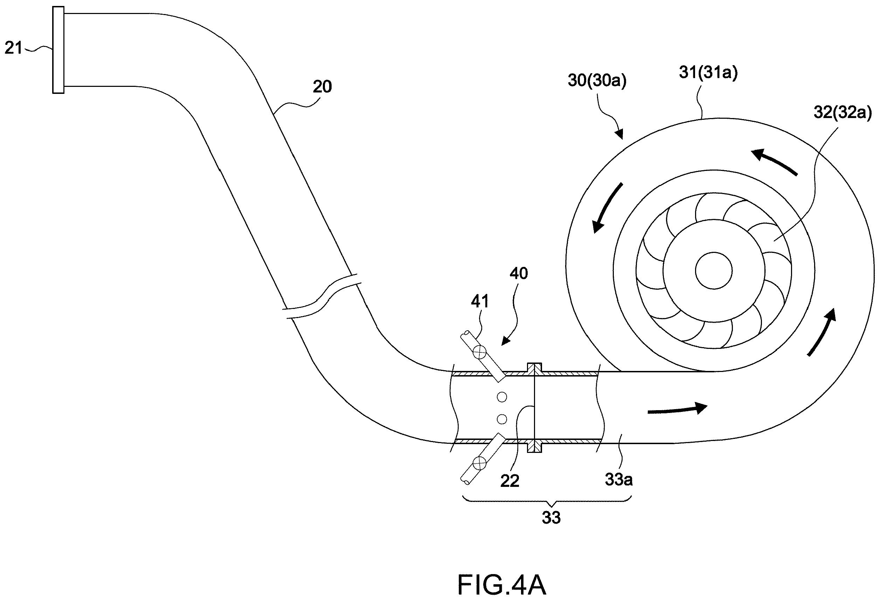

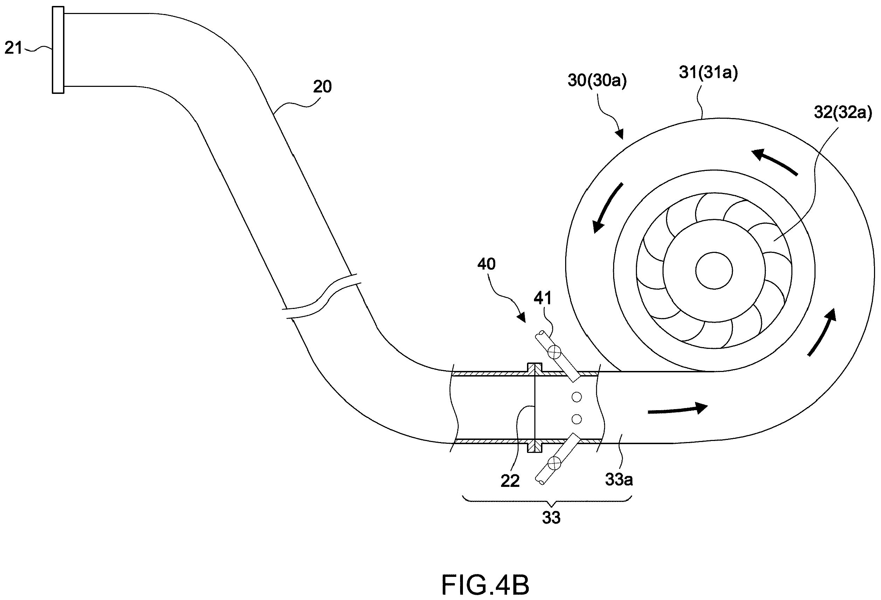

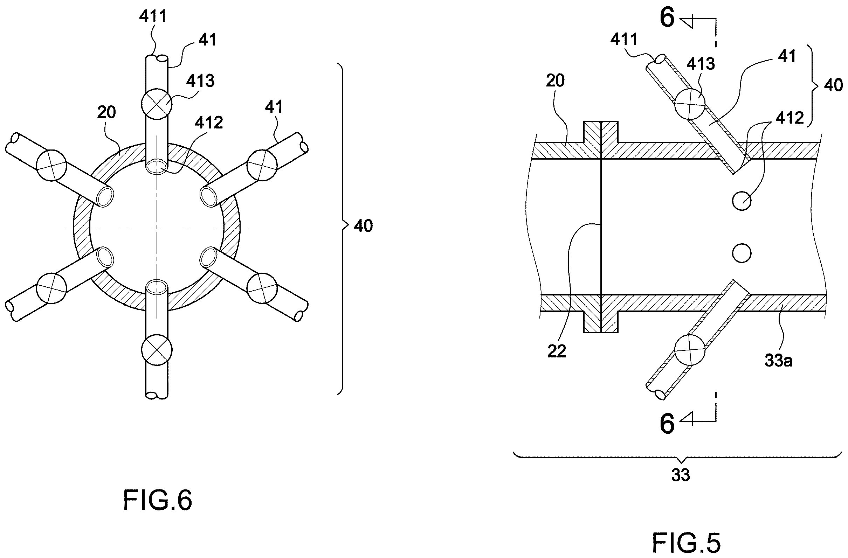

Please referring to an embodiment in the following with reference to FIGS. 3-10. A method to enhance operation efficiency of water turbines and to reduce cavitation of components thereof, comprising: having a penstock **20** installed on a dam **10** at a hydroelectric power station, said penstock having an entry **21** at an upper end and an exit **22** at a lower end; having a water turbine **30** with a casing **31** and a plurality of runner blades **32** disposed inside said casing **31**, said water turbine **30** connected to said exit **22** of the penstock **20** for driving said runner blades **32** by hydropower produced by the water flowing out from the penstock **20**, the runner blades **32** is driven by the water flow pressure of the penstock **20** to drive a generator **50**, however, the device and the basic structure of the general hydroelectric power station are formed, and the principle and function are not described herein. As shown in Fig. 3 and Fig. 4, the pipe section **33** described below in the present invention refers to a position which is provided before the exit **22** and a section of the connecting section **33a**.
wherein an air guiding device **40** is disposed between the penstock **20** and the plurality of runner blades **32** of the water turbine **30**, said air guiding device **40** including at least one air guiding tube **41** penetrating into a pipe section **33** formed by the exit **22** of the penstock **20** and a connecting section **33a** between the exit **22** and the water turbine **30**, said air guiding tube **41** having an inlet **411** at an upper end for guiding in external air and an outlet **412** at a lower end penetrating into the pipe section **33**; and an air control valve **413** is disposed in the air guiding tube **41** between the inlet **411** and the outlet **412**.

As shown in FIG. 3, in a preferred embodiment, the water turbine **30** is a reaction turbine **30a**. The reaction turbine **30a** includes a Francis turbine or a Kaplan turbine. in the present embodiment, the reaction turbine **30a** is a Francis turbine; having a closed casing **31a** and a connecting section **33a** connected to the exit **22** of the penstock **20**, and the air guiding device **40** includes at least one air guiding tube **41** which is arranged on the pipe section **33a** before the exit **22** or on the connecting section **33a**.

As shown in FIG. 4A, in the present embodiment, the air guiding device **40** is disposed on the periphery of the exit **22** of the penstock **20**, but is not limited thereto; the air guiding device **40** may also be as shown in the fig. 4B, disposed on the connecting section **33a**; the air guiding device **40** of the present invention is disposed on the periphery of the exit **22** of the penstock **20**, or is disposed in the connecting section **33a**, it can be implemented.

In the present embodiment, the air control valve **413** is either manual or automatic. The air control valve **413** is that when the water flow from the top of the penstock **20** starts to drive the runner blades **32**, the high-speed water flow state has not yet been reached, so that the negative pressure generated by the outlet **412** cannot introduce the air at this time, so the air control valve **413** must be closed, otherwise the water flow will be ejected from the outlet **412** and poured into the inlet **411**. Later, when the penstock **20** reaches the high-speed water flow state, the air control valve **413** is opened, and at this time, the negative pressure is formed at the outlet **412** of the air guiding tube **41** by high-speed water flow **h** to take in external air **a** and then form a plurality of pressured air bubbles **b** in the water **w**.

In a preferred embodiment, the outlet **412** is positioned adjacent to the exit **22** because the exit **22** has a relatively fast flow of water at this location. The outlet **412** disclosed in the present invention may have a circular hole shape, but is not limited thereto, and may be other shapes. Further, in the present embodiment, the outlet **412** is inclined rearward. This is a preferred embodiment. It has been found in an experiment that the outlet **412** is disposed perpendicular to the penstock **20**, and can also be implemented, that is, the high pressure water flow can also generate a negative pressure suction force at the outlet **412**.

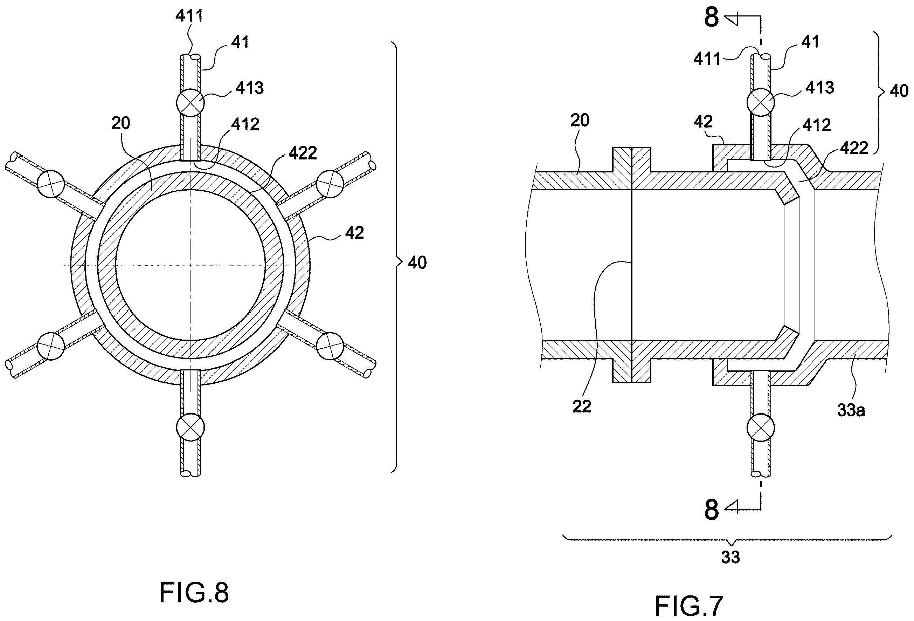

As shown in FIG. 7 and FIG. 8, in the present embodiment, the air guiding device **40** further includes an annulus periphery **42** and an annular output passage **422** connecting to the penstock **20** or to the pipe section **33a** of the water turbine **30**, and the at least one air guiding tube **41** is disposed on the annulus periphery **42**. Then the negative pressure formed at both the annular output passage **422** and the outlet **412** of the air guiding tube **41** by high-speed water flow **h** out from the penstock **20** takes in external air **a** and then forms a plurality of pressured air bubbles **b** in the water **w**.

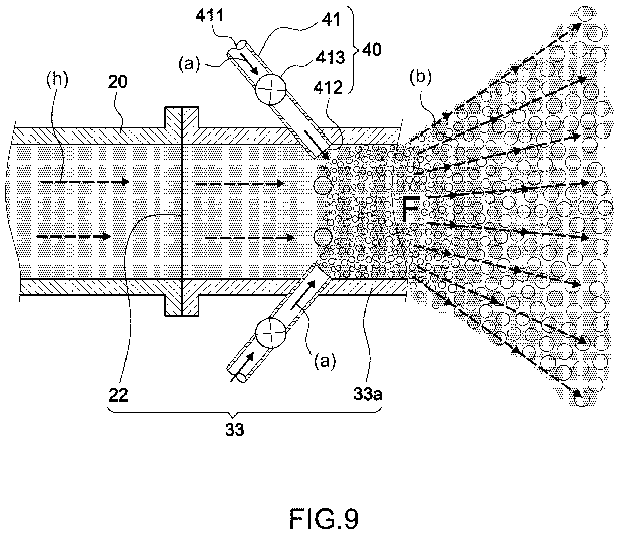

As shown in FIG.9, is a schematic diagram illustrating an application example of the present invention in an embodiment; the present invention use the plurality of pressured air bubbles **b** are produced by a head of the water and then mixed into the water **w** by the air guiding device **40**, driving the runner blades **32** by the water flow **h** as volumes of the pressured air bubbles **b** increased at a decompressed area of the water turbine **30**, so as to enhance operation efficiency of the water turbine **30** with the enhanced water kinetic energy and to reduce formation of cavities in the water and prevent components of the water turbine **30** from damages caused by cavitation.

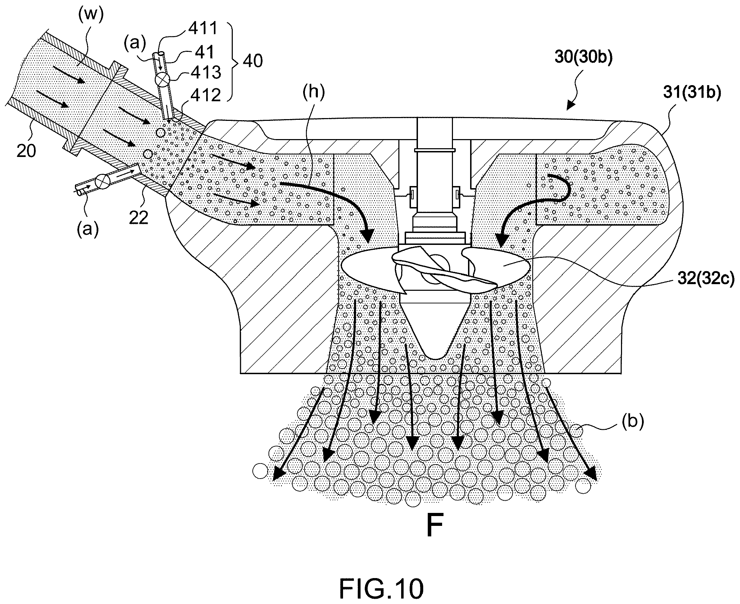

As shown in FIG. 10, is another schematic diagram illustrating the application example of the present invention in an embodiment; in the present embodiment, the water turbine **30** is a Kaplan turbine **30b**. It also belongs to the type of the reaction turbine **30a**, and has a closed casing **31b**. The difference is only that the runner blade **32** is a spiral rotating blade **32c**, so the air guiding device **40** can also be applied, and is used in France turbine, the same effect cannot be described.

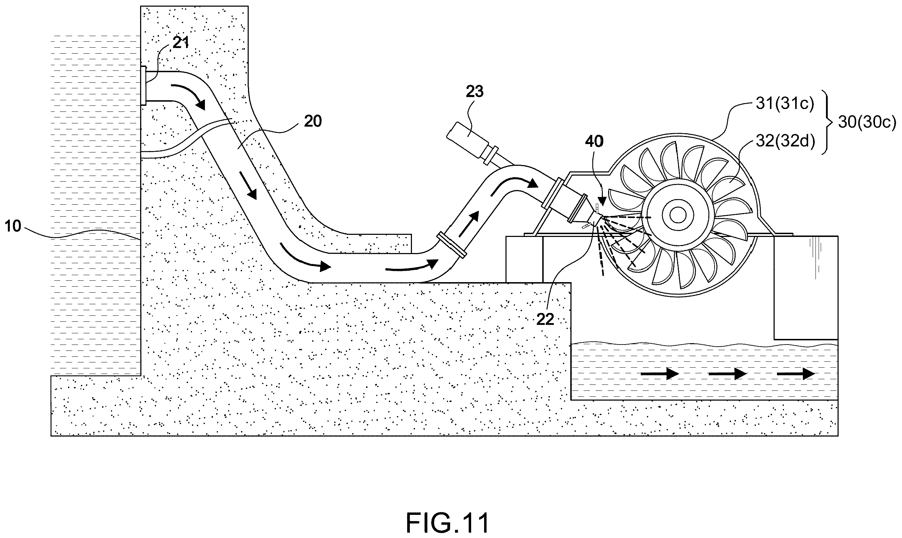

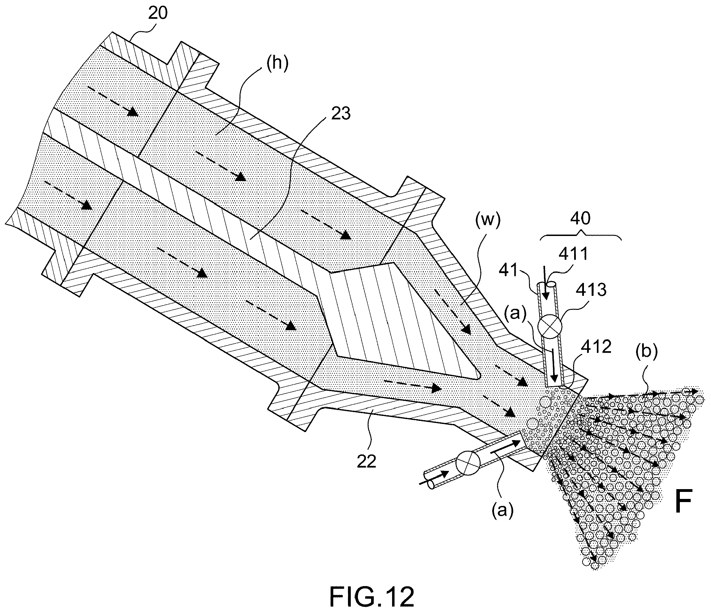

FIG. 11 is a schematic diagram of the present invention in another embodiment, showing the water turbine having an open casing; and FIG. 12 is a schematic diagram illustrating an application example of the present invention in another embodiment. The same structure as the previous embodiment is denoted by the same reference numeral, and the difference is only that the water turbine **30** is an impact turbine **30c**, belonging to the non-closed casing **31c**, and the exit **22** of the penstock **20** extends to the impact. The periphery of the spiral rotating blade **32c** of the impact turbine **30c**, and the air guiding device **40** is provided on the periphery of the exit **22**. In the present embodiment, the impact turbine **30c** includes a Pelton Turbine, and the casing **31** is a non-closed casing **31c**, and the runner blade **32** is a bucket-shaped impeller **32d**. In addition, a regulating valve **23** is disposed in front of the exit **22** of the penstock **20** for adjusting the water flow rate of the exit **22**. However, the regulating valve **23** belongs to the prior art, and is not the patent of the present invention. Therefore, whether it is a commercially available type of water turbine, such as a closed casing of Francis turbine, a Kaplan turbine, and a non-closed casing of Pelton turbine; the technical means of the air guiding device **40** of the present invention are.

In conclusion, the present invention has features described as following:
1. Application of Bernoulli's principle: a high-speed water flow **h** can be produced by using the water head position, and a negative pressure is formed at the outlet **412** of the air guiding device **40** by the high-speed water flow **h** to take in external air **a** and mix with water **w** to form the plurality of pressured air bubbles **b**, the plurality of pressured air bubbles **b** in the water flow, the energy source is derived from the conversion of the kinetic energy of the head, so there is no need for additional energy and therefore has economic benefits.
2. The principle of compressibility of air and Boyle's law: the volume of compressible air is inversely proportional to the applied pressure, i.e., **P₁V₁=P₂V₂**, when the pressure increases, the volume becomes smaller, and the pressure decreases. Become bigger. For example: **2P₁1V₁ = 1P₂2V₂.** Since water is incompressible, it becomes a water flow bubble having compressibility when the bubbles are mixed in the water flow. Therefore, the present invention contains the plurality of pressured air bubbles **b**, has compressibility, and is only a volume change upon compression. But it won't break.
3. The plurality of pressured air bubbles **b** will not break: the cavitation phenomenon is mainly caused by the high-speed water flow impinging on the runner blade (the impeller guide), and the low-pressure part is caused by the vaporization of the water due to the vapor pressure lower than the water. Corrosion of the relevant components inside the turbine, thus affecting the power and service life of the turbine; however, the present invention utilizes the head position energy to produce a high-speed water flow **h**, and a negative pressure is formed at the outlet **412** of the air guiding device **40** to take in external air **a** and mix with water **w** to form the plurality of pressured air bubbles **b**, and the introduced air bubbles are compressed and the volume is reduced, and when the pressure is gradually lowered near the water outlet, the front and rear pressures are utilized. Since the difference is changed and the instantaneous expansion becomes large, since the plurality of pressured air bubbles **b** of the present invention has compressibility, it does not break during compression, and the plurality of pressured air bubbles **b** of the present invention, which is pressurized in the decompression zone. The volume expansion of the bubble not only increases the force of the water flow to increase the power of the turbine, but also contains the plurality of pressured air bubbles **b** in the water flow, and at the same time suppresses the occurrence of cavitation in the low pressure zone, thereby preventing the rotation of the blade and its related components.

Further, the air guiding device **40** can introduce the gas by an auxiliary means, including the exhaust gas of the hydroelectric power station, and feed it into the air pipe (not shown). Therefore, it belongs to resource recycling and reuse, which will not increase resources and increase costs. Further, if the present invention requires pressurized gas injection and is released from the outlet **412**, a higher propulsion power effect can be obtained, so that a plurality of power effects can be obtained with a small amount of.

Although particular embodiments of the invention have been described in detail for purposes of illustration, various modifications and enhancements may be made without departing from the scope of the claims. Accordingly, the invention is not to be limited except as by the appended claims.

## Claims

1. A method to enhance operation efficiency of water turbines and to reduce cavitation of components thereof, comprising:
having a penstock **(20)** installed on a dam **(10)** at a hydroelectric power station, said penstock having an entry **(21)** at an upper end and an exit **(22)** at a lower end;
having a water turbine **(30)** with a casing **(31)** and a plurality of runner blades **(32)** disposed inside said casing **(31)**, said water turbine **(30)** connected to said exit **(22)** of the penstock **(20)** for driving said runner blades **(32)** by hydropower produced by the water flowing out from the penstock **(20)**;
**characterized in that** an air guiding device **(40)** is disposed between the penstock **(20)** and the plurality of runner blades **(32)** of the water turbine **(30)**, said air guiding device **(40)** including at least one air guiding tube **(41)** penetrating into a pipe section **(33)** formed by the exit **(22)** of the penstock **(20)** and a connecting section **(33a)** between the exit **(22)** and the water turbine **(30)**, said air guiding tube **(41)** having an inlet **(411)** at an upper end for guiding in external air and an outlet **(412)** at a lower end penetrating into the pipe section **(33)**; and an air control valve **(413)** is disposed in the air guiding tube **(41)** between the inlet **(411)** and the outlet **(412)**; and
forming negative pressure at the outlet **(412)** of the air guiding tube **(41)** by high speed of the water flowing out from the penstock **(20)** to take in external air and then forming a plurality of pressured air bubbles in the water;
whereby the plurality of pressured air bubbles **(b)** are produced by a head of the water and then mixed into the water **(w)** by the air guiding device **(40),** driving the runner blades **(32)** by the water flow as volumes of the pressured air bubbles increased at a decompressed area of the water turbine **(30)**, so as to enhance operation efficiency of the water turbine **(30)** with the enhanced water kinetic energy and to reduce formation of cavities in the water and prevent components of the water turbine **(30)** from damages caused by cavitation.

2. The method as claimed in claim 1, wherein the water turbine **(30)** is a reaction turbine **(30a)**, having a closed casing **(31a)** and a connecting section **(33a)** connected to the exit **(22)** of the penstock **(20)**, and the air guiding device **(40)** includes at least one air guiding tube **(41)** which is arranged on the pipe section **(33a)** before the exit **(22)** or on the connecting section **(33a)**.

3. The method as claimed in claim 2, wherein the air guiding device **(40)** further includes an annulus periphery **(42)** and an annular output passage **(422)** connecting to the penstock **(20)** or to the pipe section **(33a)** of the water turbine **(30)**, and the at least one air guiding tube **(41)** is disposed on the annulus periphery **(42)**.

4. The method as claimed in claim 2, wherein the reaction turbine **(30a)** includes a Francis turbine or a Kaplan turbine.

5. The method as claimed in claim 1, wherein the water turbine **(30)** is an impulse turbine **(30c)** and the exit **(22)** of the penstock **(20)** is extended to the plurality of runner blades **(32)** of the impulse turbine **(30c)** as the air guiding device **(40)** is disposed at a front of the exit **(22)**.

6. The method as claimed in claim 5, wherein the impulse turbine **(30c)** includes a Pelton turbine.

7. The method as claimed in claim 1, wherein the air control valve **(413)** is either manual or automatic.

8. The method as claimed in claim 1, wherein the air control valve **(413)** is closed when the water flow in the penstock **(20)** is not flowing at high speed, and the air control valve **(413)** is opened when the water flow in the penstock **(20)** is flowing at high speed.
